# EUROPÄISCHE PATENTSCHRIFT

(11) **EP 2 347 161 B1**
(45) Veröffentlichungstag und Bekanntmachung des Hinweises auf die Patenterteilung: **21.02.2018**
(21) Anmeldenummer: 10760622.0
(22) Anmeldetag: 30.08.2010
(51) Int. Cl.: F16L 11/16, F16L 11/20, F16L 55/165

(54) **WICKELROHR AUS PROFILIERTEN KUNSTSTOFFSTREIFEN**
WOUND TUBE MADE OF PROFILED PLASTIC STRIPS
TUBE PRODUIT PAR ENROULEMENT DE BANDES DE PLASTIQUE PROFILÉES

(30) Priorität: 02.09.2009 DE 102009043932
(43) Veröffentlichungstag der Anmeldung: 27.07.2011
(73) Patentinhaber: Stükerjürgen, Ferdinand, 33397 Rietberg (DE)
(72) Erfinder: Stükerjürgen, Ferdinand, 33397 Rietberg (DE)
(74) Vertreter: Strauss, Hans-Jochen
(86) Internationale Anmeldenummer: PCT/EP2010/062650
(87) Internationale Veröffentlichungsnummer: WO 2011/026813

(56) Entgegenhaltungen:
- WO-A1-88/05513
- WO-A1-88/05884
- WO-A1-98/11374
- DE-C1- 3 717 418
- JP-A- 6 190 922
- US-A- 5 225 019
- US-A- 5 660 912
- US-A- 5 669 420

## Beschreibung

### Technisches Gebiet

Die Erfindung betrifft ein Wickelrohr aus profilierten Kunststoffstreifen, deren Randbereiche derart ausgebildet sind, dass beim Wickeln sich aneinanderlegende Randbereiche des Kunststoffstreifens zweier aufeinander folgender Windungen miteinander formschlüssig verbindbar sind und bei denen zumindest eine der Oberflächen des Kunststoffstreifens im Wesentlichen in gleichen Abständen rechtwinklig abstehende Rippen aufweist.

### Stand der Technik

Wickelrohre aus Kunststoffstreifen werden beispielsweise zur Sanierung von Abwasserleitungen eingesetzt und vor Ort gefertigt. Dabei wird bei einem in EP 2 085 209 A1, DE 696 27 426 T2 oder DE 696 35 214 T2 offenbarten Vorgehen das Rohr im Abwasserkanal gebildet, wobei sich der Fertiger mit dem Herstellungsfortschritt durch den Abwasserkanal bewegt und dabei das Wickelrohr aus einem durch seinen Fertig-Teil geführten profilierten Kunststoffstreifen bildet. Bei einem anderen, in EP 0 023 242 oder EP 0 109 413 offenbarten Vorgehen ist der Fertiger stationär in einem Revisionsschacht des zu sanierenden Abwasserkanals angeordnet, dem das profilierte Kunststoffband über diesen zugeht. Das von dem Fertiger gebildete Wickelrohr wird mit Herstellungs-Fortschritt in den Kanal eingeschoben. Die zur Herstellung derartiger Wickelrohre eingesetzten Kunststoffstreifen weisen auf einer Randseite eine längs verlaufende Nut und auf der anderen Randseite eine längs verlaufende Wulst auf, so dass sich beim Wickeln die Wulst des einen Randbereichs in die Nut des folgenden Randbereichs der folgenden Windung mit Formschluss einlegt. Dieser Formschluss führt zu einer dichten Verbindung, die auch durch weitere Mittel, etwa durch Kaltverschweißung, verbessert werden Ein ähnliches Verfahren ist auch in der JP406190922 beschrieben.

Bei solchen Wickelrohren ist die mangelhafte Stabilität zumindest bei größeren Durchmessern nachteilig. Durch radial abstehende Stege auf der äußeren Oberfläche des die Außenwandung bildenden Kunststoffstreifens lässt sich zwar eine erhöhte Stabilität gewinnen, jedoch bleibt auch hier der Durchmesser für stabile Wickelrohre begrenzt. Um diesen Mangel zum Erreichen einer ausreichenden Stabilität auszugleichen, müssen die bei diesen Fertigungsweisen notwendigerweise verbleibenden Hohlräume zwischen der Wandung des Abwasserkanals und der Wandung des Wickelrohres verfüllt werden.

### Darstellung der Erfindung

Davon ausgehend, ist es das dieser Erfindung zugrunde liegende technische Problem, ein Wickelrohr erhöhter Stabilität zu schaffen, das zur Sanierung von Abwasserkanälen vor Ort aus profilierten Kunststoffstreifen einfach und wirtschaftlich herstellbar und ohne vollständige Verfüllung in den zu sanierenden Kanal einbringbar ist; weiter soll eine Vorrichtung angegeben werden, mit der solche Wickelrohre vor Ort vorteilhaft herstellbar sind.

Dieses technische Problem wird nach der Erfindung durch die kennzeichnenden Merkmale der unabhängigen Ansprüche gelöst; vorteilhafte Weiterbildungen und bevorzugte Ausführungsformen beschreiben die abhängigen Ansprüche.

Bei diesen Wickelrohren ist die Rohrwandung doppelwandig ausgebildet. Dazu wird sie aus einem ersten, inneren Kunststoffstreifen und einem zweiten, äußeren Kunststoffstreifen so zusammengefügt, dass beide Kunststoffstreifen in einem radialen Abstand voneinander gehalten sind. Dabei sind die im Wesentlichen rechtwinklig abstehenden Stege der beiden zusammengefügten Kunststoffstreifen zum Abstützen radial ausgerichtet und gegeneinander gestellt. Ihre Anordnung ist dabei so, dass der Randbereich des einen Kunststoffstreifens gegenüber dem Randbereich des anderen Kunststoffstreifens um mindestens einen Stegabstand in axialer Richtung versetzt ist. Durch die Versetzung des Randbereichs des inneren Kunststoffstreifens gegenüber dem Randbereich des äußeren Kunststoffstreifens wird das automatische Zusammenfügen in einfacher Weise ermöglicht. Vorteilhaft weist dabei auch die die äußere Wandung bildenden Kunststoffstreifens außenseitig abstehende Stege auf, was die Stabilität des so gebildeten Wickelrohres deutlich erhöht. Solche Kunststoffstreifen las-sen sich einfach durch Extrusion herstellen.

In einer vorteilhaften Weiterbildung sind zumindest einige der Stege, vorzugsweise alle, des einen der Kunststoffstreifen als Verstärkungssteg mit einem Stegkopf ausgebildet. Die diesen Stegen zugeordnete Stege des anderen Kunststoffstreifens weisen eine Kopfaufnahme auf, die die jeweiligen Stegköpfe aufzunehmen in der Lage ist. Nach dem Zusammenfügen beider Kunststoffstreifen zu dem Doppelwandband liegen die entsprechenden Stegköpfe in den diesen jeweils zugeordneten Kopfaufnahmen - innerer und äußerer Kunststoffstreifen sind so durch Formschluss zusammengehalten.

Weiterhin ist es vorteilhaft, wenn beide Kunststoffstreifen mit Verstärkungsstegen mit Stegkopf und mit Stegen mit Kopfaufnahme versehen sind. Diese sind abwechselnd so angeordnet, dass beide identisch ausgebildeten Kunststoffstreifen mit einander zugewandten Stegen zu dem Kunststoffband zusammenfügt werden können. Nach dem Zusammenfügen der beiden Kunststoffstreifen liegen der jeweilige Stegkopf mit Formschluss in der zugeordneten Kopfaufnahme. Dadurch ist die Herstellung auf ein Kunststoffband mit einheitlichem Querschnitt beschränkt, und am Ort des Einsatzes sind nur Rollen gleicher Kunststoffstreifen einheitlichen Querschnitts bereit zu halten.

Diese Verbindung wird durch Verrasten gesichert. Dazu werden die miteinander zusammenwirkenden Stegköpfe in Art von Harpunenköpfen und Kopfaufnahmen korrespondierend dazu ausgebildet, so dass diese beim Zusammenführen des äußeren Kunststoffstreifens und des inneren Kunststoffstreifens ineinandergleiten und damit die Sicherung der Verbindung automatisch. Um diese dauerhaft zu gestalten kann als weiteres Mittel auf ein Verkleben oder Verschweißen zurück gegriffen werden. Dazu weisen zumindest einige der Stegköpfe und/oder der Kopfaufnahmen einen Auftrag eines Klebers oder eines eine Kaltverschweißung bewirkenden Mittels auf und sind so miteinander verkleb- bzw. verschweißbar.

Bei der Herstellung des Wickelrohres werden die beiden Kunststoffstreifen zu einem Doppelstreifen zusammengefügt und um einen dem Durchmesser der zur Sanierung in den Kanal einzuführenden Rohres entsprechenden Biegeradius gebogen. Dabei entsteht eine Längendifferenz zwischen dem äußeren Kunststoffstreifen und dem inneren Kunststoffstreifen. Zum Ausgleich dieser Längendifferenz sind zumindest an einem der Kunststoffstreifen Mittel zum Längenausgleich vorgesehen. Dazu ist es vorteilhaft, wenn Ausbiegungen in U-Form oder in OMEGA-Form zwischen zwei Verstärkungsstegen oder zwi-schen zwei Stegen vorgesehen sind.

Um die Randverbindung zu sichern wird an einem Randbereich der Kunststoffstreifen ein Gegenhalter mit Rastkopfaufnahme vorgesehen, während der andere Randbereich des zweiten der Kunststoffstreifen ein Haltesteg mit Haltestegkopf aufweist. Dieser Haltestegkopf ist so ausgebildet, dass er beim Zusam-menfügen der Randbereiche der beiden Kunststoffstreifen zweier benachbarter Windungen des Wickelrohres in die Rastkopfaufnahme des Gegenhalters eingeführt wird und dort verrastet. Vorteilhaft ist weiter, wenn an den Randbereich eines der Kunststoffstreifen ein unter einem stumpfen Winkel anstehender Sperrsteg angeformt ist. Dieser legt sich beim Zusammenfügen der Randbereiche der beiden Kunststoffstreifen sperrend gegen den äußersten der Verstärkungssteg an. Es versteht sich dabei von selbst, dass zum Erhalt des einheitlichen Querschnittes der eine Randbereich des Kunststoffbandes mit Gegenhaltern mit Rastkopfaufnahme und der andere Randbereich mit Haltesteg mit Haltestegkopf sowie ein Randbereich mit dem unter einem stumpfen Winkel anstehender Sperrsteg, versehen ist.

Als Vorrichtung zum Herstellen derartiger Wickelrohre eignet sich ein im Bereich der Mündung des zu sanierenden Kanals angeordneter, den Wickel für das Wickelrohr formenden Rollensatz. Dieser ist jedoch zum Zusammenfügen der beiden Kunststoffstreifen zu dem für das Wickelrohr benötigten Doppelband mit einem Rollenvorlauf versehen, so dass dem Rollensatz zum Formen des Wickels das zusammengefügte Doppelband zugeführt wird.

Vorteilhaft ist es, wenn dem Rollensatz eine Vorrichtung vorgeschaltet ist, mit der ein Kleber oder ein Mittel zum Kaltverschweißen der zusammenwirkenden Stege der Kunststoffstreifen und/oder der zusammenwirkenden Randbereiche des Kunststoffbandes aufgetragen werden kann. Diese Mittel stellen eine Sicherung für die an sich feste Verrastung der zusammengefügten Kunststoffstreifen dar.

Bei einem Vorgehen zum Auftragen des Klebers oder des Mittels zur Kaltverschweißung in der Kleberauftragsvorrichtung ist ein Rollenauftrag vorgesehen. Hierbei läuft eine Auftragsrolle durch ein Kleberbad und nimmt bei ihrem Austauchen Kleber mit. Anschließend wird der mitgenommene Kleber oder das mitgenommene Mittel zum Kaltverschweißen auf die damit zu benetzenden Stellen des Kunststoffstreifens übertragen wird, wobei Andruckrollen für den für das Übertragen notwendige Anliegen Sorge tragen. Bei einem anderen Vorgehen ist ein Sprühauftrag vorgesehen, wobei nicht zu benetzende Bereiche des Kunststoffstreifens im Sprühbereich abgedeckt sind. In beiden Fällen können Abstreifvorrichtungen vorgesehen sein, die überschüssigen Kleber abnehmen. Bei einigen Klebern muss das Zusammenführen unmittelbar nach dem Klebeauftrag erfolgen. In diesem Fall wird die Kleberauftragsvorrichtung unmittelbar vor den die beiden Kunststoffstreifen zusammenfügenden Rollen vorgesehen. Benötigt der Kleber eine gewisse Zeit zum Ablüften, ist diese Zeitspanne durch Wahl der Entfernung zwischen der Kleberauftragsvorrichtung und den die beiden Kunststoffstreifen zusammenfügenden Rollen bei der entsprechenden Vorschubgeschwindigkeit einstellbar. Ein Auftragen mit anderen Auftragsmittel, wie beispielsweise Sprühdüsen wird dabei nicht ausgeschlossen.

Die Kunststoffstreifen werden von den über Tage stehenden Vorratsrollen abgezogen und durch den Revisionsschacht dem vor Ort aufgestellten Wickelfertiger zugeführt. Dabei können sich Verschmutzungen auf die Oberflächen der Kunststoffstreifen setzten, die das Verrasten der Stege sowie der Randbereiche stören. Um solchen Störungen vorzubeugen, werden zum Schutz der von den Vorratsrollen abgezogenen und dem Wickelfertiger mit Einlauf-Rollensatz durch den Revisionsschacht zulaufenden Kunststoffstreifen im Revisionsschacht Profilschutz-Mittel angeordnet, die beide Kunststoffstreifen umgeben und diese so insbesondere vor Verschmutzung schützen. Bei tief liegenden Kanälen kann die hängende Last der durch den Revisionsschacht dem Wickelfertiger zugeführten Kunststoffstreifen so groß werden, dass die Zuführung gefährdet wird. In solchen Fällen ist es vorteilhaft, zusätzliche Bremsrollen vorzusehen, die zumindest einen Teil der Last abfangen.

Diese sind vorteilhaft in der Schutzführung angeordnet.

### Kurze Beschreibung der Zeichnungen

Das Wesen der Erfindung wird an Hand der in den Figuren 1 bis 8 dargestellten Ausführungsbeispielen näher erläutert; dabei zeigen
Fig. 1: Wickelrohr in Fertigung (schematisch):
Fig. 2: Innenstreifen (Querschnitt);
Fig. 3: Außenstreifen (Querschnitt);
Fig. 4: Innen- und Außenstreifen zusammengefügt.
Fig. 5: Doppelstreifen vor Vereinigung der Randbereiche;
Fig. 6: Doppelstreifen mit zusammengefügten Randbereichen.
Fig. 7: Doppelstreifen Stegköpfen und Kopfaufnahmen verklebt;
Fig. 8: Kanalsanierung mit Wickelrohr (schematisch):
Fig. 9: Wickelfertiger im Schachtgrund mit Kleberauftragsvorrichtung.

### Bester Weg zur Ausführung der Erfindung

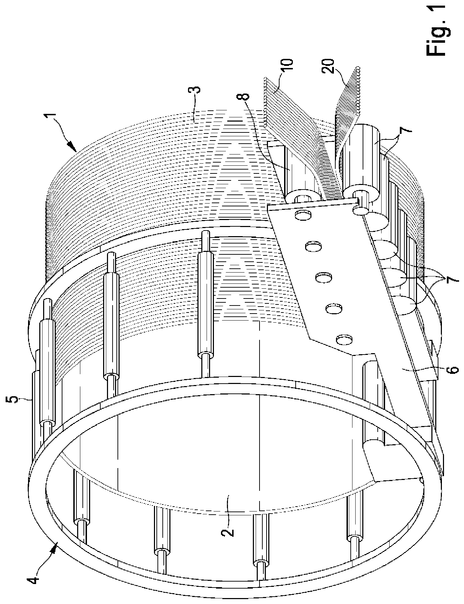

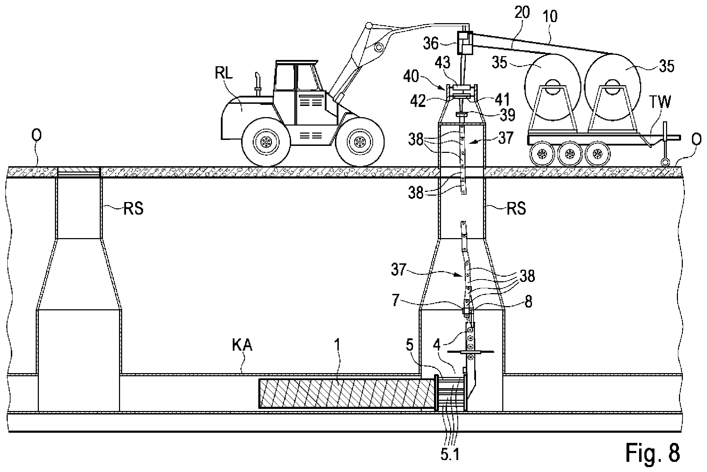

Zur Herstellung des Wickelrohres 1 wird zunächst das innere Kunststoffstreifen 10 mit dem äußeren Kunststoffstreifen 20 zu dem Doppelband 30 (Fig. 8) verbunden, aus dem dann in einem vor der Mündung des zu sanierenden Kanals "KA" ortsfest aufgestellten Wickelfertiger 4 der das Wickelrohr 1 geformt und mit jeder neuen Windung des Wickelrohres 1 im Kanal um eine Streifenbreite des Doppelbandes 30 vorgeschoben wird. Dazu dienen zum einen die im rol-Iformerartig ausgebildeten Einlauf 6 angeordnete Einlaufrollen 7 und 8, die dem Wickelfertiger 4 vorgeschaltet sind. Die Figur 1 zeigt den Wickelfertiger 4 in schematisierter Darstellung.

Mit dem Wickelkäfig 5 mit seinen Rollen 5.1 des Wickelfertigers 4 wird das nunmehrige Doppelband 30 in die dem Krümmungsradius der vorangehenden Windungen des Wickelrohres 1 angepasste Krümmung gebracht und mit den Randbereichen 14.1 bzw. 24.1 des inneren und des äußeren Kunststoffstreifens 10 bzw. 20 an die korrespondierenden Randbereiche 14.2 bzw. 24.2 des inneren Kunststoffstreifens 10' bzw. des äußeren Kunststoffstreifens 20' des Doppelbandes 30' der vorangehenden Windungen angelegt, wobei diese Randbereiche zum fertigen Wickelrohr verbunden werden.

Um dieses Verbinden der beiden Kunststoffstreifen 10 und 20 sowie dieses Zusammenfügen deren Randbereiche bei der Bildung des Wickelrohres 1 durchführen zu können, weisen die beiden Kunststoffstreifen 10 und 20 entsprechende komplementäre Profilierungen auf, die im Folgenden beschrieben sind:

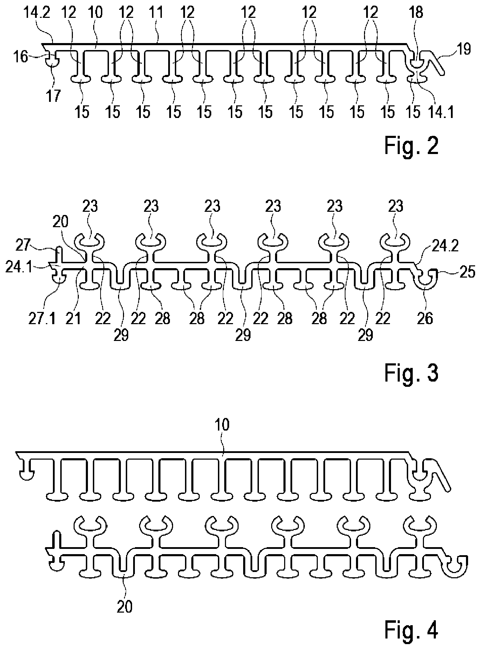

Die Figuren 2 und 3 zeigen beide Kunststoffstreifen 10 und 20 mit ihren Profilierungen jeweils im Querschnitt. Der innere Kunststoffstreifen 10 weist zwischen seinen Randbereichen 14.1 und 14.2 an der als innere Seite dienenden Wandung im Wesentlichen rechtwinklig abstehende Stege auf, die als Stützstege 12 ausgebildet sind. Die freien Enden der Stützstege 12 sind zu Stegköpfen 13 geformt. Der äußere Kunststoffstreifen 20 weist zwischen seinen beiden Randbereichen 24.1 und 24.2 ebenfalls Stege 22 auf, deren freien Enden zu einer Kopfaufnahme 23 geformt sind.

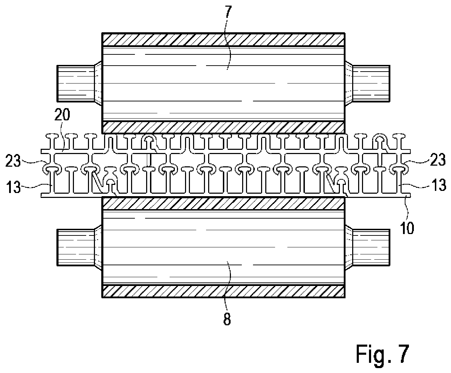

Diese Kopfaufnahmen 23 sind so ausgebildet, dass die Stegköpfe 13 der gegenüberliegenden Stützstege 12 einführbar und eingeführt mit Formschluss dort festgelegt sind. Dabei ist vorteilhaft Kleber in zumindest einige der Kopfaufnahmen 23 ein- oder auf zumindest einige Stegköpfe 13 (Fig. 7) aufzubringen, der für eine Kaltverschweißung sorgt. Zwischen zwei Stegen 22 des äußeren Kunststoffstreifens 20 sind - hier U-förmig dargestellte - Ausbiegungen 29 als Dehnungsausgleichsmittel angeordnet.

Zur Bildung des Wickelrohres 1 bedarf es des Zusammenfügens der Randbereiche 14.1, 14.2 und 24.1, 24.2 zweier beim Wickeln sich aneinanderlegender Windungen des Wickels. Dabei versteht es sich von selbst, dass Rastkopf 15 mit Randaufnahme 18 bzw. Gegenhalter 25 mit Rastkopfaufnahme 26 und darin eingreifender Stegkopf 17 des Randstegs 16 bzw. Gegenhalterkopf 27.1 des Gegenhalters 27 in Laufrichtung des Kunststoffstreifens 10 um eine Umfangslänge des Wickels des Wickelrohres 1 voneinander entfernt liegen. Der Randbereich 14.1 des ersten, inneren Kunststoffstreifens 10 weist dazu einen angeformten Rastkopf 15 und der Randbereich 14.2 der anderen Seite dieses Kunststoffstreifens 10 einen Randsteg 16 mit einem Stegkopf 17 auf. Dabei ist der Rastkopf 15 mit einer Randaufnahme 18 versehen, in die der Stegkopf 17 beim Zusammenfügen mit Formschluss ein-führbar ist.

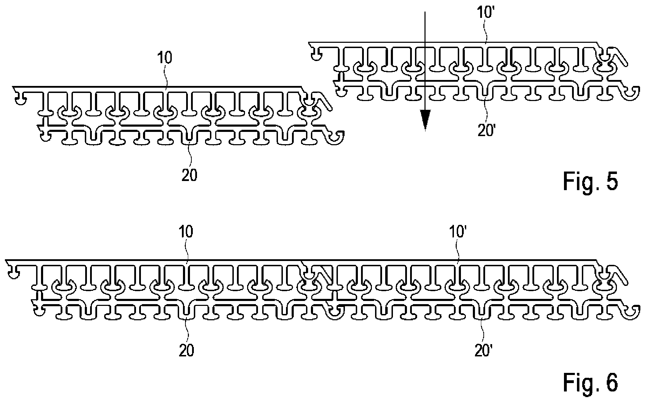

In analoger Weise werden die Randbereiche 24.1 und 24.2 des äußeren Kunststoffstreifens 20 miteinander verbunden. Hier ist der eine Randbereich 24.1 des äußeren, zweiten Kunststoffstreifens 20 mit einer Rastkopfaufnahme 26 versehen, während das andere Ende 24.2 einen Gegenhalter 27 mit Gegenhalterkopf 27.1 aufweist. Dieser Gegenhalterkopf 27.1 wird beim Zusammenfügen in die Rastkopfaufnahme 26 mit Formschluss eingeführt. Dieses Zusammenfügen ist in den Figuren 2, 3 und 4 zur näheren Erläuterung in Schritten dargestellt. Die Figur 5 zeigt dabei die Lage der Kunststoffstreifen 10 und 20 zweier aufeinander folgender Windungen vor der Vereinigung zu dem aus den beiden Kunststoffstreifen 10 und 20 zu bildenden Wickelrohres 1 vor dem Zusammenfügen, das in der Darstellung der Figur 6 vollendet ist. Dabei sind in den Figuren 5 und 6 die Kunststoffstreifen der folgenden Windung mit 10' und 20' bezeichnet.

Zum mechanischen Verhindern eines Lösens der Verbindung der Randbereiche der Kunststoffstreifen 10 bzw. 20 aneinander grenzender Windungen werden auch Sperrmittel vorgesehen. Dazu ist an den Randbereich 14.1 des ersten, inneren Wickelrohres 10 ein Sperrsteg 19 angeformt. Beim Zusammenfügen legt sich das freie Ende des Sperrsteges 19 gegen den benachbarten Stützsteg 12 des Randbereichs des Kunststoffstreifens 10 der folgenden Windung 10' und bewirkt so eine Sperrung dieser Rastverbindung.

Um die Formschlussverbindung der Kunststoffstreifen 10 und 20 sowie der Randbereiche der Kunststoffstreifen 10, 10' und 20, 20' aneinander liegender Windungen eines Wickelrohres 1 untereinander zu sichern, werden diese mittels Klebung oder Kaltverschweißung gesichert. Dazu ist ein Klebeauftrag mit Kleber oder Mittel zum Kaltverschweißen vorgesehen, der auf zumindest einen der sich gegenüber stehenden Innenseiten dieser Kunststoffstreifen aufgebracht ist. In der Figur 7 ist dies schematisch in einer Ausführungsform mit den beiden Kunststoffstreifen 10 und 20 zwischen den Einlaufrollen 7 und 8 dargestellt. Der Auftrag wurde hier auf die in den Kopfaufnahmen 23 eingerasteten Stegköpfe 13 vorgesehen, die so in der mechanischen Verbindung zwischen beiden durch zusätzliche Haftkräfte gesichert sind.

Durch dieses Verbinden zweier Kunststoffstreifen 10 und 20 zu dem Doppelstreifen und dessen Krümmen zum Anpassen an den Krümmungsdurchmesser des Wickelrohres entsteht eine Längendifferenz, ist doch die Kreislänge des äußeren Kunststoffstreifens 20 dem Unterschied der beiden Radien entsprechend länger. Um dies auszugleichen werden zum einen (wie oben bereits beschrieben) Ausgleichsmittel vorgesehen, zum anderen tritt ein Verschieben der Verbindungsstellen zweier äußerer Kunststoffstreifen gegenüber den Verbindungsstellen der inneren Kunststoffstreifen ein. Dieses Verschieben stellt sicher, dass die Verbindungsstellen zweier äußerer Kunststoffstreifen gegenüber den Verbindungsstellen der inneren Kunststoffstreifen praktisch nicht übereinander liegen, was die Herstellung begünstigt.

Zur Sanierung eines Kanals "KA" vor Ort werden - wie in der Figur 8 schematisch dargestellt - zwei Kunststoffstreifen 10 und 20 eingesetzt, der eine Kunststoffstreifen 10 für das Innenband und der zweite Kunststoffstreifen 20 für das Außenband, die auf üblichen, auf einem auf dem Oberflächen-Niveau "O" nahe der Mündung eines Revisionsschachtes "RS" stehenden Transportwagen "TW" abrollbar gelagerten Transportrollen 35 zum Abziehen vorrätig gehalten sind. Von den Transportrollen 35 abgezogen, werden beiden Kunststoffstreifen 10 und 20 durch den Revisionsschacht "RS" einem Wickelfertiger 4 zugeführt, der in dessen Grund vor dem zu sanierenden Kanals "KA" aufgestellt ist. Dazu sind über der Mündung des Revisionsschachtes "RS" eine Einlaufführungen 36 vorgesehen, die in dem dargestellten Ausführungsbeispiel von einem Ausleger eines Radlader "RL" gehalten sind. Alternativ kann diese Einlaufführung 36 auch an einem auf die Mündung des Revisionsschachts "RS" aufgesetzten Mündungsaufsatz 34 gehalten sein.

Dem Wickelfertiger 4 sind die Einlaufrollen 7 und 8 vorgeschaltet, mit denen die beiden Kunststoffstreifen 10 und 20 zu dem Doppelband 30 zusammengefügt werden. Dieses Doppelband 30 wird dem Wickelfertiger zugeführt, dessen Einlauf 4.1, der in Art eines Rollformers aufgebaut, auch die Einlaufrollen 7 und 8 als integrierten Bestandteil umfassen kann, richtet dieses Doppelband 30 so aus, dass es von dem Wickelkäfig 5 des Wickelfertigers 4 in die Krümmung des zu sanierenden Kanals "KA" gebracht und mit seinen Randbereichen mit den beim Wickeln benachbarten Randbereichen von Innenband und Außenband der vorausgehenden Windung der Wickelrohres 1 (wie in Figuren 5 und 6 dargestellt) in Kontakt gebracht und zusammengefügt werden kann.

Die durch den Revisionsschacht "RS" laufenden Kunststoffstreifen 10 und 20 müssen zum Zusammenfügen zum einen frei von Beschädigungen und zum anderen frei von störenden Partikeln sein. Um dies zu erreichen, wird im Revisionsschacht "RS" ein Profilschutz 37 vorgesehen, durch den die Kunststoffstreifen 10 und 20 laufen und so geschützt sind. Dieser Profilschutz 37 ist aus einzelnen Gliedern 38 mit etwa rechteckigem Querschnitt gebildet, die aneinander gelenkt sind, und der von dem Ausleger des Radlader "RL" oder von einem auf die Mündung des Revisionsschachtes "RS" aufgesetzten Mündungsaufsatz 34 oder auch einem gesonderten Kran getragen werden kann.

Um eine hinreichende Sauberkeit der zusammenzufügenden Kunststoffstreifen 10 und 20 zu gewährleisten, sind Bürsteneinsätze 39 vorgesehen. Diese Bürsteneinsätze 39 werden zweckmäßig dem Einlauf der Kunststoffstreifen 10 und 20 in den Profilschutz vorgesehen. Ist ein Kleberauftrag vorgesehen, erfolgt das Abbürsten zweckmäßiger Weise vor dem Kleberauftrag und die Bürsteneinsätze 39 sind der Vorrichtung zum Kleberauftrag vorgeschaltet.

Bei sehr großen Teufen der Lage des zu sanierenden Kanals 2 kann es notwendig werden, Mittel vorzusehen, die die Last der hängenden Kunststoffstreifen 10 bzw.20 im Profilschutz 37 abfangen. Dazu eignen sich beispielsweise Rollenanordnungen mit U-förmiger oder OMEGA-förmiger Auslenkung der Kunststoffstreifen.

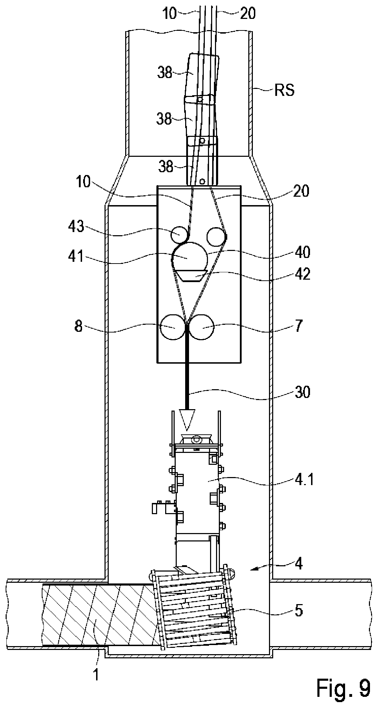

Zur Sicherung der Verrastung der beiden Kunststoffstreifen 10 und 20 zu dem Doppelband 30 durch Verklebung oder Kaltverschweißung sind Kleberauftragsvorrichtungen 40 (Fig. 8, 9) vorgesehen, die eine in einem Klebervorrat 42 laufende Auftragsrolle 41 und eine Andruckrolle 43 aufweist. Die Andrückrolle 43 führt dabei den mit Kleber zu versehende Kunststoffstreifen 10 oder 20 so, dass dessen beim Zusammenfügen dem anderen der Kunststoffstreifen 20 oder 10 zugewandte Oberfläche an die Auftragsrolle 41 angelegt ist. Im dargestellten Ausführungsbeispiel wird das innere Kunststoffstreifen 10 mit seinen mit Stegköpfen 13 versehen Stegen 12 so geführt, dass die Stegköpfe 13 einen Kleberauftrag erhalten, wobei Breite und/oder Profilierung der Auftragsrolle 41 die Anzahl der mit Kleber beschichteten Stegköpfe 13 bestimmt. Diese Kleberauftragsvorrichtung 40 kann am Einlauf 4.1 in den Wickelfertiger 4 angeordnet sein (Fig. 9), bei einer anderen, in Figur 8 dargestellten Anordnung befindet sich die Kleberauftragsvorrichtung 40 an dem Mündungsaufsatz 34, wobei in beiden Fällen auf die Darstellung der Kleberzufuhr zum Klebervorrat 42 verzichtet wurde. Die so vorbereiteten Kunststoffstreifen 10 und 20 werden danach in den Einlaufrollen 7 und 8 oder im Rollensatz des Einlaufs 5 des Wickelfertigers 4 zusammengefügt und verrastet, wobei die Verklebung bzw. die Verschweißung erfolgt. Dabei versteht es sich von selbst, dass die das Zusammenfügen der beiden Kunststoffstreifen bewirkende Einlaufrollen 4.1, die hier als zwei Rollen dargestellt sind, auch als mehrstufiger Rollensatz ausgebildet sein können.

### Bezugszeichenliste:

01: Wickelrohr
02:
03:
04: Wickelfertigers
04.1: Einlauf
05: Wickelkäfig
05.1: Rollen
06: Einlauf
07: Einlaufrollen
08: Einlaufrollen
09:
10: innere Kunststoffstreifen
10' Windung
11: Streifenbasis
12: Stützstege
13: Stegköpfen
14.1: Randbereich des inneren Kunststoffstreifens 10
14.2: Randbereich äußeren Kunststoffstreifens
15: Rastkopf
16: Randstegs
17: Stegkopf
18: Randsteg / Randauf-nahme
19: Sperrsteg
20: äußeren Kunststoffstreifen
22: Stege
23: Kopfaufnahme
24.1: Randbereich des inneren Kunststoffstreifens 10
24.2: Randbereich des äußeren Kunststoffstreifens 10/ Ende
25: Gegenhalter
27: Gegenhalter
27.1: Gegenhalterkopf
28: Rastkopf-aufnahme
29: Aus-biegungen
30: Doppelband
31:
32:
33:
34: Mün-dungsaufsatz
35: Transport-rollen
36: Einlauf-führungen
37: Profilschutz
38: Gliedern
39: Bürsteneinsätze
40: Kleberauftragsvorrichtungen
42: Kle-bervor-rat
41: Auftragsrolle
42: Klebervorrat
43: Andrückrolle
KA: Kanal "KA"
O: Oberflächen-Ni-veau "O"
RS: Revisionsschachtes "RS"
RL: Radlader "RL"
TW: Transportwagen "TW"

## Patentansprüche

1. Vorrichtung zum Herstellen eines doppelwandigen Wickelrohres in einem zu sanierenden unterirdischen Kanal, wobei die Vorrichtung zwei Vorratsrollen (35), einen Wickelfertiger (4) und einen Rollensatz (6) umfasst, bei der je ein Kunststoffstreifen (10; 20) von zwei auf oberirdischem Niveau (O) aufgestellten Vorratsrollen (35) abgezogen und durch einen Revisionsschacht (RS) einem in dessen Grund im Bereich der Mündung des zu sanierenden Kanals (KA) ortsfest aufgestellten Wickelfertiger (4) mit einem den Wickel für das Wickelrohr (1) bildenden rotierenden Käfig (5) zuführbar ist, wobei dem Wickelfertiger (4) ein in Art eines Rollformers aufgebauter Rollensatz (6) mit Einlaufrollen (7, 8) vorgeschaltet ist, in dem in dem beide Kunststoffstreifen (10, 20) zu einem durch formschlüssige Vereinigung der Randbereiche mit Gegenhalterkopf 27.1 und Rastkopfaufnahme 26 zu dem doppelwandigen Kunststoffband (30) zusammenfügbar und so ausgerichtet dem Wickelfertiger (4) zuführbar und von dessen Wickelkäfig (5) in die Krümmung des Doppelrohres (1) für den zu sanierenden Kanals "KA" entsprechende Krümmung bringbar sind, wobei die Randbereichen 14.1 bzw. 24.1 des inneren und des äußeren Kunststoffstreifens 10 bzw. 20 an die korrespondierenden Randbereiche 14.2 bzw. 24.2 des inneren Kunststoffstreifens 10' bzw. des äußeren Kunststoffstreifens 20' des Doppelbandes 30' der vorangehenden Windungen=anlegbar und diese Randbereiche zum fertigen Wickelrohr verbindbar sind.

2. Vorrichtung nach Anspruch 1,
**gekennzeichnet durch**
einen Kleberauftragsvorrichtung (40) zum Auftragen des Klebers oder der Mittel zum Kaltverschweißens auf die zusammenwirkenden Stegköpfe / Kopfaufnahmen (13, 23; 14, 24) der zusammenzufügenden Kunststoffstreifen (10, 20) und/oder die zusammenwirkenden Haltestegköpfe/Rastkopfaufnahmen (27.1, 26) der zusammenfügenden Randbereiche der Kunststoffstreifen (10, 20) des Doppelbandes (30) ausgebildete Auftragsmittel.

3. Vorrichtung nach Anspruch 1 oder 2,
**dadurch gekennzeichnet,**
**dass** als Auftragsmittel für den Kleber oder die Mittel zum Kaltverschweißens auf die Stegköpfe (13) oder die Kopfaufnahmen (23; 14, 24) der zusammenzufügenden Kunststoffstreifen (10, 20) und/oder die zusammenwirkenden Haltestegköpfe/Rastkopfaufnahmen (27.1, 26) der zusammenzufügenden Randbereiche der Kunststoffstreifen (10, 20) des Doppelbandes (30) eine Auftragsrolle (41) vorgesehen ist, wobei vorzugsweise Breite und/oder Profilierung der Auftragsrolle (41) der Ausformung der Stegköpfe (13) bzw. der Kopfaufnahmen (23) der zusammenwirkenden Stege der Kunststoffstreifen und/oder der zusammenwirkenden Randbereiche der zusammengefügten Kunststoffstreifen entspricht.

4. Vorrichtung nach Anspruch 3,
**dadurch gekennzeichnet,**
**dass** die Kleberauftragsvorrichtung (40) zum Auftragen des Klebers oder der Mittel zum Kaltverschweißens für einen Rollenauftrag mit Auftragsrolle oder für einen Sprühauftrag ausgebildet ist.

5. Vorrichtung nach einem der Ansprüche 1 bis 4
**gekennzeichnet durch**
einen Profilschutz (37), vorzugsweise gebildet aus aneinander gelenkten Einzelgliedern (38), der im Revisionsschacht (RS) zum Schutz der von den auf oberirdischem Niveau (O) aufgestellten Vorratsrollen (35) abgezogenen und durch den Revisionsschacht (RS) dem in dessen Grund ortsfest montierten Wickelfertiger (4) zulaufenden Kunststoffstreifen (10, 20) insbesondere vor Verschmutzung vorgesehen ist.

6. Vorrichtung nach Anspruch 5,
**dadurch gekennzeichnet,**
**dass** der Profilschutz (37) insbesondere bei sehr tiefer Kanallage Bremsmittel, vorzugsweise Bremsrollen zum Abfangen der hängenden Last der Kunststoffstreifen (10, 20) aufweist.

7. Vorrichtung nach Anspruch 5 oder 6,
**dadurch gekennzeichnet,**
**dass** der Profilschutz (37), vorzugsweise der Kleberauftragsvorrichtung (40) vorgeschaltet ist und eine Bürstenvorrichtungen (39) aufweist, deren Borsten zum Abbürsten deren Oberflächen zumindest gegen die einander zugewandten Oberflächen der zum Doppelband (30) zusammen zu fügenden Kunststoffstreifen (10, 20) gerichtet sind.

## Claims

1. A device for producing a double-walled wound pipe in an underground conduit to be renovated, wherein the device comprises two storage rollers (35), a winder (4) and a roller set (6), wherein a strip of plastic (10; 20) is drawn off from each of two storage rollers (35) set up at above-ground level (O) and can be taken via a maintenance shaft (RS), to a stationary winder (4), with a rotating cage (5) forming the winding for the wound pipe (1), set up in its base in the area of the opening of the conduit to be renovated (KA), wherein upstream of the winder (4) a roller set (6) designed as a type of roll former with inlet rollers (7, 8) in that both plastic strips (10, 20) can be joined together through the positive connection of the marginal area with counter-holder head 27.1 and locking head holder 26 to form the double-walled plastic strip (30) and, aligned in this way can be taken to the winder (4) and brought by the latter's winding cage (5) to the curvature of the double pipe (1) corresponding to the curvature of the conduit "KA" to be renovated, wherein the marginal areas 14.1 and 24.1 of the inner and outer plastic strip 10 and 20 respectively can be applied to corresponding marginal areas 14.2 and 24.2 of the inner plastic strip 10' and the outer plastic strip 20' respectively of the double strip 30' of the preceding windings and these marginal areas can be combined into the completed wound pipe.

2. The device according to claim 1,
**characterised in**
**that** an adhesive application device (40) for applying the adhesive or the agents for cold welding to the interacting web heads/head holders (13, 23; 14, 24) of the plastic strips (10, 20) to be joined together and/or the application means forming the interacting holder web heads/locking head holders (27.1, 26) of the joining marginal areas of the plastic strips (10, 20) of the double strip (30).

3. The device according to claim 1 or 2,
**characterised in**
**that** as the means for applying the adhesive or the cold welding agents on the web heads (13) or the head holders (23; 14, 24) of the plastic strips (10, 20) to be joined and/or the interacting holding web heads/locking head holders (27.1, 26) of the marginal area of the plastic strips (10, 20) of the double strip (30) an application roller (41) is provided, wherein preferably the width and/or profiling of the application roller (41) corresponds with the shaping of the web heads (13) and head holders (23) of the interacting webs of the plastic strips and/or of the interacting marginal areas of the joined together plastic strips.

4. Device according to claim 3,
**characterised in**
**that** the adhesive application device (40) for applying the adhesive or the cold welding agents is designed for roller application with an application roller or for spray application.

5. The device according to any one of claims 1 to 4,
**characterised by**
a profile protection (37), preferably formed of individual elements (38) hinged to each other, which is provided in the maintenance shaft (RS) for the protection, particularly against soiling, of the plastic strips (10, 20) drawn from the storage rollers (35) set up at above-ground level (O) and passing through the maintenance shaft (RS) to the winder (4) fixed in place in the base thereof.

6. The device according to claim 5,
**characterised in**
**that** the profile protection (37), particularly in the case of a very deep conduit position comprises braking means, preferably braking rollers to intercept the suspended load of the plastic strips (10, 20).

7. The device according to claim 5 or 6,
**characterised in**
**that** the profile protection (37) is preferably arranged upstream of the adhesive application device (40) and has a brush device (39), the bristles of which for brushing the surfaces are at least directed against the surfaces, that face each other, of the plastic strips (10, 20) to be joined together to form the double strip (30).

## Revendications

1. Dispositif destiné à fabriquer un tube à double paroi, produit par enroulement dans une canalisation souterraine qui doit être réhabilitée, le dispositif comportant deux rouleaux de réserve (35), un finisseur d'enroulement (4) et un jeu de rouleaux (6) sur lequel chaque fois un ruban de matière plastique (10 ; 20) est retiré de deux rouleaux de réserve (35) posés sur un niveau (O) hors sol et par un regard d'inspection (RS) peut être amené à un finisseur d'enroulement (4) posé de manière stationnaire dans la base de ce dernier, dans la région de l'embouchure du canal à assainir (KA) avec une cage (5) rotative, formant le bobinage pour le tube d'enroulement (1), un jeu de rouleaux (6) conçu à la manière d'une profileuse avec des rouleaux d'entrée (7, 8) étant monté en amont du finisseur d'enroulement (4) dans lequel les deux rubans de matière plastique (10, 20) peuvent être assemblés en une union par complémentarité de forme des zones marginales avec tête antagoniste 27.1 et logement de tête d'enclenchement 26 pour obtenir la bande de matière plastique (30) à double paroi et peuvent être alimentés au finisseur d'enroulement (4) et être amenés par la cage d'enroulement (5) de celui-ci dans la courbure du double tube (1) en étant orientés pour la courbure correspondant à la canalisation « KA » qui doit être réhabilitée, les zones marginales 14.1 ou 24.1 du ruban de matière plastique intérieur et extérieur 10 ou 20 pouvant être posées sur les zones marginales 14.2 ou 24.2 correspondantes du ruban de matière plastique intérieur 10' ou du ruban de matière plastique extérieur 20' de la double-bande 30' des tours précédents et lesdites zones marginales pouvant être reliées pour obtenir le tube produit par enroulement fini.

2. Dispositif selon la revendication 1,
**caractérisé par**
un dispositif applicateur d'agent adhésif (40) destiné à appliquer l'agent adhésif ou des produits de soudage à froid sur les têtes de nervure / logements de tête (13, 23 ; 14, 24) coopérant des rubans de matière plastique (10, 20) qui doivent être assemblés et/ou sur les têtes de nervures de retenue /logements de têtes d'enclenchement (27.1, 26) coopérant(e)s des zones marginales à assembler des rubans de matière plastique (10, 20) de la double bande (30).

3. Dispositif selon la revendication 1 ou 2,
**caractérisé en ce**
**qu'**en tant que moyen d'application pour l'agent adhésif ou les produits de soudage à froid sur les têtes de nervure (13) ou les logements de tête (23 ; 14, 24) coopérant(e)s des rubans de matière plastique (10, 20) à assembler et/ou sur les têtes de nervures de retenue /logements de têtes d'enclenchement (27.1, 26) coopérant(e)s des zones marginales à assembler des rubans de matière plastique (10, 20) de la double bande (30), il est prévu un rouleau applicateur (41), de préférence la largeur et/ou le profilage du rouleau applicateur (41) correspondant à la conformation des têtes de nervure (13) ou des logements de tête (23) des nervures correspondantes du ruban de matière plastique et/ou aux zones marginales coopérantes des rubans de matière plastique assemblés.

4. Dispositif selon la revendication 3,
**caractérisé en ce**
**que** le dispositif applicateur d'agent adhésif (40) destiné à appliquer l'agent adhésif ou le produit de soudage à froid est conçu pour une application au rouleau par rouleau applicateur ou pour une application par vaporisation.

5. Dispositif selon l'une quelconque des revendications 1 à 4,
**caractérisé par**
un protecteur de profil (37), formé de préférence d'éléments individuels (38) articulés les uns aux autres, qui est prévu dans le regard d'inspection (RS) pour protéger, notamment des salissures les rubans de matière plastique (10, 20) retirés des rouleaux de réserve (35) posé au niveau hors sol (O) et alimentés à travers le regard d'inspection (RS) vers le finisseur d'enroulement (4) monté de manière stationnaire dans la base de ce dernier.

6. Dispositif selon la revendication 5,
**caractérisé en ce**
**que** notamment si la canalisation se trouve en position très profonde, le protecteur de profil (37) comporte des moyens de freinage, de préférence des galets de freinage destinés à intercepter la charge accrochée des rubans de matière plastique (10, 20).

7. Dispositif selon la revendication 5 ou 6,
**caractérisé en ce**
**que** le protecteur de profil (37) est monté de préférence en amont du dispositif applicateur d'agent adhésif (40) et comporte un dispositif à brosses (39) dont les poils destinés à brosser les surfaces de ce dernier sont orientés au moins contre les surfaces qui se font face des rubans de matière plastique (10, 20) qui doivent être assemblés en la double-bande (30).
